# EUROPEAN PATENT SPECIFICATION

(11) **EP 0 842 009 B1**
(45) Date of publication and mention of the grant of the patent: **10.04.2002**
(21) Application number: 96922340.3
(22) Date of filing: 26.06.1996
(51) Int. Cl.: B23Q 1/26

(54) **A COORDINATE MACHINE**
KOORDINATENMASCHINE
MACHINE A SYSTEME DE COORDONNEES

(30) Priority: 29.06.1995 SE 9502362
(43) Date of publication of application: 20.05.1998
(73) Proprietor: WATER JET SERVICE AB, 372 38 Ronneby (SE)
(72) Inventor: RYD, Jan, S-372 38 Ronneby (SE)
(74) Representative: Andersson, Andy Rudy
(86) International application number: SE9600842
(87) International publication number: WO9701415

(56) References cited:
- EP-A- 0 346 287
- WO-A-93/22099
- US-A- 4 774 442

## Description

The present invention relates to a machine which comprises a right-angled frame whose respective opposing parallel sides are intended to support, either directly or indirectly, one end of a bar for sliding or rolling movement in the longitudinal direction of the machine, wherein the bar carries a working implement for movement in a direction that differs from the movement direction of said bar.

A machine of this kind is also referred to as a coordinate machine and its function is to move a load in at least two mutually opposite directions.

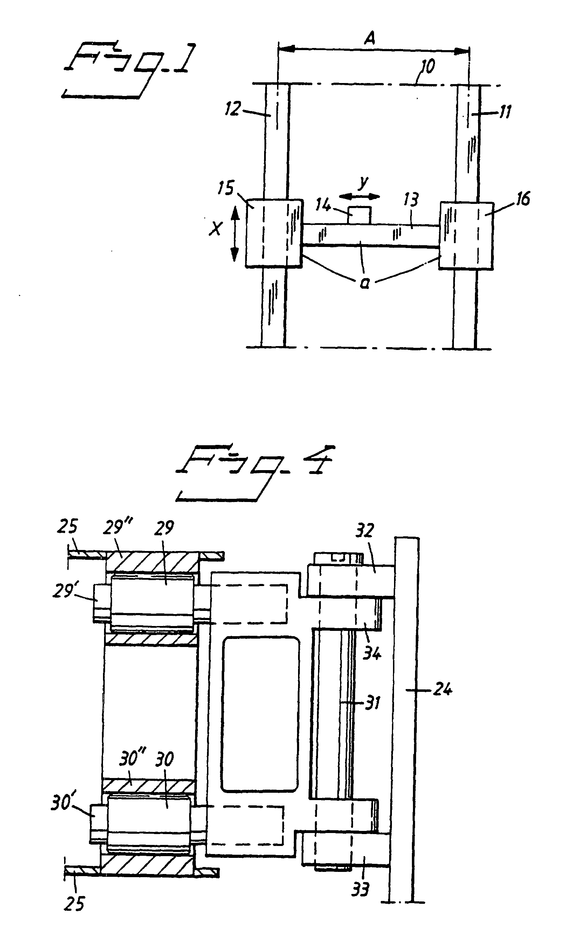

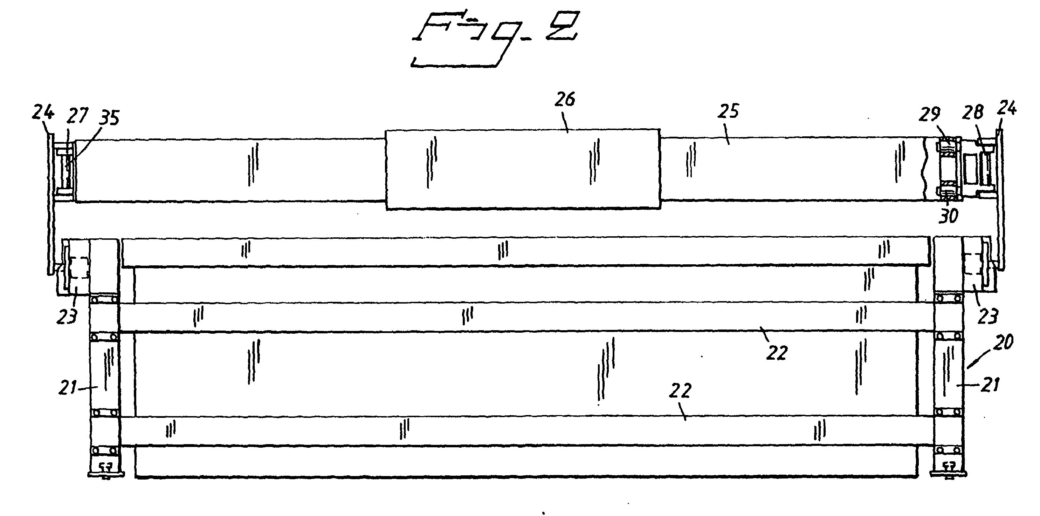

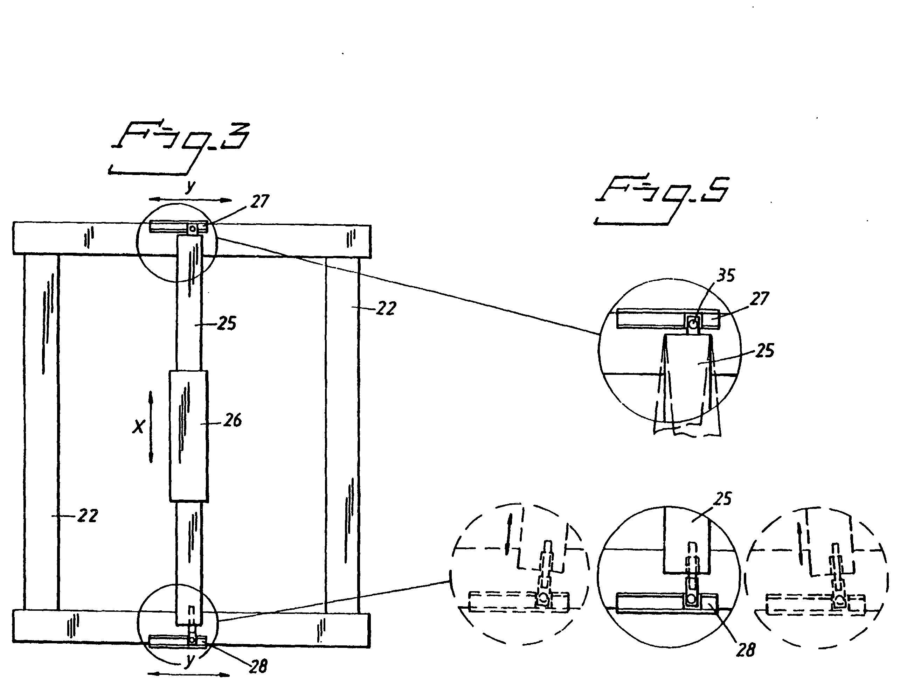

The principle on which such a machine is based will be evident from Fig. 1, which illustrates a coordinate machine in which the carrying axle or bar must be supported at both ends. Coordinate machines are required to work with great precision. The following principles have been applied conventionally to the manufacture of such machines:

Very high tolerance requirements are placed on those machine elements that together form a stable, fixed unit, i.e. the machine part referenced "a", with respect to the parallelism between frame sides and axle or bar attachment means. The parallel side paths must be extremely accurate with regard to parallelism, and the distance "A" must be an exact measurement. It will be obvious to the skilled person that those forces and loads that occur when a machine is in operation, both active and passive forces, must be reduced to an optimum in order to achieve the desired machine function. For these reasons, the terms "highly accurate" and "exact parallelism" shall be considered as being relative expressions, although it will be realized that production costs are therewith necessarily high. Furthermore, the machine part "a" must be driven synchronously on respective opposite sides in order to achieve optimal synchronization of axle or bar movement. Because high precision requirements result in high costs, this represents a problem.

The object of the present invention is to reduce production costs without negatively affecting the precision of the machine. This object is achieved with a machine having the characteristic features set forth in the characterizing clause of the following Claim 1.

The solution proposed by the invention greatly reduces the tolerance requirements on the machine part "a". The solution obviates the earlier required parallelism of the movement paths "A" and also greatly reduces the need to synchronize the two drives, by virtue of enabling the axle or bar to be positioned obliquely without risk of the machine malfunctioning.

The dependent Claims define advantageous although nonlimiting solutions.

A machine of the aforedescribed kind can be used for many different types of working functions. For instance, the working implement carried by the bar may be a water-cutting device for precision-working an underlying workpiece.

The invention will now be described in more detail with reference to a preferred embodiment thereof and also with reference to the accompanying drawings, in which
Fig. 1 illustrates schematically the construction of a known coordinate machine;
Fig. 2 is a side view of a machine constructed in accordance with one embodiment of the invention;
Fig. 3 shows one embodiment of the inventive machine construction from above;
Fig. 4 illustrates a preferred embodiment of a journal mounting between bar and machine frame; and
Fig. 5 illustrates schematically movement of a bar or axle equipped with the journal bearing according to Fig. 3.

As illustrated in Fig. 1, a typical coordinate machine includes a frame part 10, two mutually spaced and mutually parallel guides 11, 12. These guides 11, 12 form supports for a transverse moving bar 13, which carries a working implement 14. Each end of the bar 13 is connected with or constructed as a machine component 15, 16. The machine components 15, 16 coact with the guides 11, 12, such as to enable the bar 13 and the working implement 14 carried thereby to move in the longitudinal direction x of the machine. The working implement 14 may be a water-cutting device for machining an underlying workpiece (not shown). The working instrument 14 can slide or roll on the bar 13 in the y-direction. The x and y movement directions are marked with arrows in Fig. 1.

The machine components that together form the machine part "a", provide a stable and fixed unit and place high tolerance requirements on the parallelism between the machine components or guides 15, 16. It follows from this that the two mutually parallel guides 11, 12 must be accurately positioned and that the centre distance "A" must be precise. Each of the components or guides 15, 16 is driven by a motor such that the members 15, 16 will move with exact synchronism.

The object of the invention is to provide a machine of the aforesaid kind of which a small part is constructed in accordance with the known machine construction.

A machine constructed in accordance with one embodiment of the present invention is illustrated in Figs. 2-5. Fig. 2 is a side view of such a machine, which includes a frame 20 having four vertical struts 21 mutually being connected by beams 22. Mutually opposing struts 21 each carry a travelling construction 23 of a known kind. One end of a supportive member 24 is attached to respective travelling constructions 23 and the opposite end of the supportive member 24 is connected to a bar 25 which carries a working implement 26. This construction enables the bar 25, which is thus suspended at two opposing points, across the travelling construction 23 can be moved in one direction (the y-direction in Fig. 3) and that the working instrument 26 can be moved along the bar 25 in another direction (the x-direction in Fig. 3).

This is illustrated schematically in Fig. 3 and it will be seen from the Figure that the bar 25 coacts with respective supportive members 24 through the medium of a first journal means 27 at one end, and a second journal means 28 at the opposite end.

The first journal means 27 can be said to form a mechanical zero point, which in this case implies that the bar 25 can pivot or swing about a vertical pin 35 to a limited extent at its attachment end.

The second journal means 28 at the opposite end of the bar 25 is so mounted as to enable the bar 25 to move horizontally to a limited extent, and also to pivot.

Fig. 4 illustrates a preferred embodiment of one such journal means 28.

It will be seen from Fig. 4 that the journal means includes two mutually parallel bushes 29, 30, each of which is through-passed by a respective pin 29', 30'. Respective bushes 29, 30 have an axial play and are placed between guide walls 29", 30". The bearing or journal may be a known type of ball bushing which will enable the pins 29', 30' to be moved longitudinally therein. A vertical pivot pin 31 is connected to the supportive members 24 of the bar 25 by means of attachment lugs 32, 33, and a pivot attachment 34 connects the respective ball bushings 29, 30, 29', 30' to the pivot axle 31.

The journal means 27 and 28 respectively enable the bar 25 to move in the manner illustrated schematically in Fig. 5. It will be readily seen that the following advantages are afforded:
a) The tolerance requirement on the machine part "a" (see Fig. 1) is greatly reduced.
b) The requirement of precise measurement between the driven guide paths (the measurement "A" in Fig. 1) is dramatically reduced by virtue of the inventive solution enabling the bar 25 to become obliquely positioned without risk of clamping, jamming or any other incident that may cause the machine to malfunction.

The invention is thus based on the general principle of providing one end of the bar or carrier which coacts movingly with the guides and which carries the working implement with a journal means 27 which enables said end to pivot, and with a bearing means 28 at the other end which enables the bar 25 to move horizontally to a limited extent and also affords limited pivotal movement to said bar.

It will be obvious to the person skilled in this art that the bearing means 28 may be constructed differently to what is shown in Fig. 4, and that only one such bearing means 28 need be provided, even though two such journal means are preferred.

## Claims

1. A machine comprising a right-angled frame (20) whose respective opposing parallel sides are intended to carry movingly one end of a bar (25) which can move preferably in the longitudinal direction (x) of the machine and which carries a working implement (14) for movement in a direction (y) which deviates from the direction in which the bar (25) moves, whereby one end of the bar (25) coacts with a first journal means (27) which forms a mechanical zero point and enables the bar (25) to pivot to a limited extent and the other end of the bar (25) coacts with a second journal means (28) which enables the bar (25) to move horizontally and pivotally, **characterised in that** the second journal means (28) comprises at least one vertical pivot pin (31) which is received by lugs (32, 33, 34) projecting out from an attachment member (24) and from an intermediate member respectively in mutually opposite directions and at least one ball-bushing arrangement (29, 29', 30, 30') connected to the bar (25) and to the vertical pivot pin (31) by means of the intermediate member.

2. A machine according to Claim 1, **characterised in that** mutually opposite travel paths along which the bar (25) can move coact respectively with one end of the attachment member (24) whose other end carries the respective journal means (27, 28) with which the bar (25) coacts.

3. A machine according to Claim 2, **characterized in that** the first journal means (27) is formed by a second set of lugs which are mounted respectively at one end of the bar (25) and on the attachment member (24) and project outwardly in opposite directions and through which a pivotal pin (35) is inserted.

## Patentansprüche

1. Maschine, umfassend einen rechteckigen Rahmen (20) dessen gegenüberliegende parallele Seiten bestimmt sind, ein Ende einer Stange (25) beweglich zu tragen, die sich vorzugsweise in Längsrichtung (x) der Maschine bewegen kann, und die ein Bearbeitungswerkzeug (26) zu einer Bewegung in einer Richtung (y) trägt, die von der Richtung, in der sich die Stange (25) bewegt, abweicht, wobei ein Ende der Stange (25) mit einer ersten Lagerung (27) zusammenwirkt, die einen mechanischen Nullpunkt bildet und eine begrenzte Schwenkbewegung der Stange ermöglicht, und wobei das andere Ende der Stange (25) mit einer zweiten Lagerung zusammenwirkt, die eine horizontale Bewegung und eine Schwenkbewegung der Stange (25) ermöglicht, **dadurch gekennzeichnet, daß** die zweite Lagerung (28) mindestens einen vertikalen Gelenkstift (31) umfaßt, der in Nasen (32, 33, 34) eingreift, die von einem Befestigungsteil (24) und von einem Zwischenteil in zueinander entgegengesetzten Richtungen abstehen, und mindestens eine Kugel-Buchsenanordnung (29, 29', 30, 30') umfaßt, die über das Zwischenteil mit der Stange (25) und mit dem vertikalen Gelenkstift (31) verbunden ist.

2. Maschine nach Anspruch 1, **dadurch gekennzeichnet, daß** zueinander entgegengesetzte Bewegungsbahnen, entlang welchen sich die Stange (25) bewegen kann, mit einem Ende des Befestigungsteils (24) zusammenwirken, dessen anderes Ende die betreffende Lagerung (27, 28) trägt, mit dem die Stange (25) zusammenwirkt.

3. Maschine nach Anspruch 2, **dadurch gekennzeichnet, daß** die erste Lagerung (27) von einer zweiten Gruppe von Nasen gebildet ist, die an dem einen Ende der Stange (25) bzw. an dem Befestigungsteil (24) angeordnet sind und in entgegengesetzten Richtungen nach außen vorspringen und in die ein Gelenkstift (35) eingesetzt ist.

## Revendications

1. Machine comportant un bâti (20) à angle droit dont des côtés parallèles respectifs se faisant face sont destinés à porter de manière mobile une extrémité d'une barre (25) qui peut se déplacer de préférence suivant la direction (x) longitudinale de la machine et qui porte un outil (14) de travail pour un déplacement suivant une direction (y) qui s'écarte de la direction dans laquelle se déplace la barre (25), une extrémité de la barre (25) coopérant avec des premiers moyens (27) à palier qui forment un point mécanique zéro et permettent à la barre (25) de pivoter dans une mesure limitée et l'autre extrémité de la barre (25) coopère avec des deuxièmes moyens (28) à palier qui permettent à la barre (25) à se déplacer horizontalement et en pivotement, **caractérisée en ce que** les deuxièmes moyens (28) à paller comportent au moins une broche (31) de pivot verticale qui est reçue par des oreilles (32,33,34) faisant saillie hors d'un élément (24) de fixation et à partir d'un élément intermédiaire respectivement dans des directions mutuellement opposées et au moins un agencement (29,29',30,30'), à douille et à bille, connecté à la barre (25) et à la broche (31) de pivot verticale au moyen de l'élément intermédiaire.

2. Machine suivant la revendication 1, **caractérisée en ce que** les trajets de déplacement mutuellement opposés le long desquels la barre (25) peut se déplacer coopèrent respectivement avec une extrémité de l'élément (24) de fixation dont l'autre extrémité porte les moyens (27,28) à palier respectifs avec lesquels la barre (25) coopère.

3. Machine suivant la revendication 2, **caractérisée en ce que** les premiers moyens (27) à palier sont formés par un deuxième ensemble d'oreilles qui sont montées respectivement à une extrémité de la barre (25) et sur l'élément (24) de fixation et font saillie vers l'extérieur suivant les directions opposées et à travers lesquelles une broche (35) pivotante est insérée.
